# EUROPEAN PATENT APPLICATION

(11) **EP 2 314 837 A1**
(43) Date of publication of application: **27.04.2011**
(21) Application number: 09173338.6
(22) Date of filing: 16.10.2009
(51) Int. Cl.: F01N 3/20

(54) **Mixing apparatus for mixing an exhaust gas with a liquid**

(71) Applicant: Swenox AB, 42131 Västra Frölunda (SE)
(72) Inventor: Karlsson, Mikael, 413 11 Göteborg (SE); Fyhr, Christian, 428 35 Kållered (SE)
(74) Representative: Lind, Urban Arvid Oskar

(57) **Abstract**

A mixing apparatus (1) for use in an exhaust gas treatment system for mixing a liquid, such as urea, in the exhaust gas. The mixing apparatus (1) comprises a mixing chamber (2); a tubular part (3) having an inlet (32), an outlet (31) and a tubular wall (33) extending between the inlet (32) and the outlet (31). The tubular wall (33) is provided with at least one opening (34), and preferably multiple perforations, enabling a gas passage through the wall (33). At the same time, the tubular part (3) provides an unobstructed tubular path extending between the inlet (32) and the outlet (31). A liquid injector for injecting a liquid into the tubular part (3) is arranged in the vicinity of the inlet (32). Hereby, the tubular part (3) receives a first part of the exhaust gas in the tubular part (3) through the inlet (32), and receives a second part of the exhaust gas through the at least one opening (34) through the tubular wall (33).

## Description

### Field of the invention

The present invention relates to a mixing apparatus for mixing a gas of an exhaust gas stream conveyed through the mixing apparatus with an additive liquid. Such a mixing apparatus may e.g. be used as a gas treatment apparatus for treating exhaust gases from diesel engines. The present invention also extends to a vehicle having a diesel engine, the vehicle being equipped with such a gas treatment apparatus.

### Background of the invention

Mixing devices for mixing a gas of an exhaust gas stream with an additive liquid are used in e.g. in exhaust after treatment systems for diesel engines.

In exhaust after treatment systems, diesel engine exhaust gases contain a number of noxious gases, such as nitrogen oxides, sulphur oxides and carbon oxides, as well as un-burnt hydrocarbons, carbon and other particles. Some of these compounds can be treated so as to render them less harmful. It is therefore common practice to pass the exhaust gases through one or more treatment elements such as catalytic converters and filters. The exhaust gases can be subjected to reduction of nitrogen oxides to nitrogen by injecting a reducing agent, typically urea dissolved in water, into the gas stream and then passing it through a catalytic treatment element. This process is known as Selective Catalytic Reduction (SCR). In practice, the efficiency of the process is partly dependent upon the quality of the mixing of the reducing agent and gas before the mixture enters the catalyst. Such a technology may also be combined with other technologies such as catalyzed Diesel Particulate Filters, CRT(TM) (Continuously Regenerating Trap) technology or other treatment methods to further reduce undesirable emissions from diesel engines. In such filters, adequate mixing may also be required, if e.g. a fluid containing hydrocarbons, such as diesel, are mixed with the gas stream before filtration.

Such mixing apparatuses for exhaust after treatment systems are e.g. disclosed in WO 2009/024815 and EP 1 262 644.

However, a common problem with previously known mixing apparatuses is that part of the introduced liquid often gets in contact with the solid parts of the mixing apparatus, such as the tubular walls of gas channels or the walls of a static mixer. This is a great disadvantage, both since this tends to clog the system and reduce the flow capacity of the system, and also since the introduced liquid, such as urea, is highly corrosive and quickly deteriorates the affected parts. The deposition of the liquid may leads to poor mixing and distribution of the liquid in the gas. Further, the known mixing apparatuses often have a high flow resistance, which negatively affects the overall throughput and performance of the exhaust system.

For example, the mixing device disclosed in WO 2009/024815 uses a static mixer in the input of the tubular mixing chamber. Such a static mixer forms an obstruction in the flow path which is both subject to deposition of liquid on the walls and greatly increases the flow resistance. Similarly, the mixing apparatus disclosed in EP 1 262 644 uses a perforated tubular part wherein the entire gas flow is led through the perforated wall, which leads to high flow resistance. Further, the liquid injector is located far downstream in the mixing chamber, which leads to deposition of liquid on the wall outside the outlet of the mixing chamber.

Accordingly there is a need for a mixing apparatus with adequate mixing capability, and where the problems with liquid deposition on the solid parts of the system and high flow resistance are alleviated.

### Summary of the invention

It is therefore an object of the present invention to provide a mixing apparatus for mixing a gas of an exhaust gas stream conveyed through the mixing apparatus with an additive liquid which addresses the above-discussed problems and needs.

This object is achieved with a mixing apparatus, a method and an exhaust gas treatment system according to the appended claims.

According to a first aspect of the invention there is provided a mixing apparatus for use in an exhaust gas treatment system for mixing a liquid in the exhaust gas, comprising:
a mixing chamber;
a tubular part having an inlet, an outlet and a tubular wall extending between said inlet and outlet, wherein said tubular wall is provided with at least one opening enabling a gas passage through said wall, the tubular part providing an unobstructed tubular path extending between said inlet and said outlet;
a liquid injector for injecting a liquid into said tubular part in the vicinity of said inlet;
wherein the tubular part is arranged to receive a first part of said exhaust gas in said tubular part through said inlet, and to receive a second part of said exhaust gas through said at least one opening through the tubular wall.

In this application, "unobstructed" is used to indicate that there is no major hindrance, such as static mixers and the like, arranged in the way of the gas flow in the tubular part.

The mixing apparatus of the present invention has in computer simulations proven to be very effective.

The first part of the mixing apparatus, where the liquid is introduced into the first part of the gas stream, the liquid can here be introduced into a relatively axially directed flow around the liquid injector, and with a relatively low flow velocity. This reduces the tendency for the liquid, such as urea, to hit the walls of the tubular part. Further downstream, the second part of the gas stream that flows into the tubular part through the openings of the tubular wall will "push" the liquid spray towards the center of the tubular part, away from the walls, which also reduces the interaction between the liquid and the wall. Still further, since exhaust gas is provided on both sides of the tubular part, the tubular part will always be warm, which further reduces the risk for liquid deposition on the walls.

The introduction of the second gas stream from the openings in the tubular wall will also create small jet streams into the tubular part, which leads to turbulence and enhanced mixing between the gas and the liquid. Still further, the downstream introduction of the second gas stream leads to a lower flow velocity upstream in the tubular part, close to inlet and the liquid injector, and a higher flow velocity downstream, close to the outlet, which also leads to improved mixing performance. In particular, the relatively low flow velocity in the vicinity of the liquid injector protects the liquid spray and increases the residence time, whereby the liquid-gas mixing is improved. The increased residence time also provides enhanced evaporation of the liquid droplets.

The mixing apparatus of the present invention also has a thermal inertia effect, which e.g. reduces the thermal stresses in the system during regeneration. During regeneration, the temperature is momentarily radically increased. In the present mixing apparatus, part of the thermal energy is absorbed by the tubular part, thereby reducing the thermal stress in other parts.

Further, in this mixing apparatus, the first part of the gas stream is conveyed through an unobstructed tubular part with very low flow resistance, and consequently, the overall flow resistance introduced in the mixing apparatus is relatively low. Thus the pressure loss created by the mixing apparatus is relatively low.

Still further, the present mixing apparatus can be made relatively compact, and can easily be integrated in many different types of exhaust gas treatment systems. This is highly advantageous, since there is a constant strive to reduce the overall dimensions of exhaust gas treatment systems, and particularly for exhaust gas treatment systems to be used on land bound vehicles such as trucks and the like. However, it is also possible to use the mixing apparatus on other types of vehicles, such as in conventional passenger cars, or on ships and vessels.

The shape and positioning of the inlet of the tubular part may easily be adapted to control the division between the first and second part of the gas stream, so that the relative amount of gas flowing through the inlet and through the wall openings may be controlled in relation to the specific use and context.

Preferably, the exit of the liquid injector is arranged inside the tubular part. By such an arrangement, the risk of the introduced liquid spray taking any other way then axially into the tubular part is greatly reduced.

Further, it is preferred that the inlet of the tubular part is funnel shaped, and wherein the liquid injector is arranged on a protruding bulge, preferably arranged concentrically in relation to said funnel shaped opening. Hereby, the first part of the gas stream will enter the tubular part from all directions around the liquid injector, which will lead to a centered and axially directed injected liquid spray. Even if a concentric arrangement is preferred, it may in some contexts be advantageous with a non-concentric arrangement instead, e.g. to compensate for other non-symmetric parts of the system. This also applies for the placement of the tubular part, which may be arranged both concentrically and non-concentrically within the mixing chamber. Thus, the arrangement of the protruding bulge and/or the tubular part in a non-concentric way may be used for optimization of the gas stream path through the system.

The tubular wall is preferably provided with a plurality of openings, and most preferably perforations. The openings may be arranged symmetrically in the circumferential direction of said tubular wall. For example, the tubular part may comprise a section with a multitude of evenly distributed perforations. However, it is also possible to arrange the openings in an asymmetric pattern. Such a configuration can be used to adapt the mixing apparatus to compensate for difficult geometrical configurations in the gas treatment system, etc.

However, alternatively other types of openings are conceivable. For example, the opening(s) may be in the form of slit(s) extending in an axial and/or circumferential direction of the tubular wall. For example, one or several axial slits may be provided, or one or several circumferential slits. Further, one or several slit openings having both an axial and circumferential direction may be provided, extending in a helical path along the tubular part.

It is further preferred that the mixing chamber is tubular, and that the tubular part is arranged essentially concentrically within said mixing chamber.

Further, the outlet of the tubular part is preferably connected to a wall of the mixing chamber around the periphery of the outlet. Hereby, a closure is provided between the outlet of the tubular part and the mixing chamber, whereby the second part of the gas stream, conveyed outside the tubular part, is forced through the openings of the tubular wall. Additionally, or alternatively it is also possible to lead a part of the gas stream so that it by-passes the tubular part, by allowing a part of the second part of the gas stream to exit the mixing apparatus between the outlet of the tubular part and the mixing chamber wall, and/or by providing a separate channel bypassing the entire mixing apparatus as a third part of the gas stream. Such an arrangement would lead to even lower overall flow resistance and pressure loss. Such a by-pass stream may be obtained through a separate path, or e.g. by providing an opening between the tubular part and the mixing chamber.

It is also preferred that at least a part of the tubular wall forms a funnel shaped section with an increasing cross-sectional area towards the outlet. Hereby, the increase of the flow velocity due to the second part of the gas stream entering the tubular part through the openings may be reduced.

Further, the distance between a sidewall of the mixing chamber and the tubular wall is preferably gradually decreasing towards the outlet of said tubular part. Hereby, the second part of the gas stream can be controlled to enter the tubular part relatively evenly distributed over the length of the tubular part.

In a preferred embodiment, the tubular wall has a diameter being at least 50% of the corresponding diameter of the mixing chamber, and preferably at least 70%, and most preferably in the range 70-90%. This provides an effective separation of the gas streams into the first and second part.

The tubular part preferably has an axial length in the range 10-100 cm, and more preferably in the range 15-60 cm, and most preferably in the range 25-50 cm. Hereby, a sufficient length to ensure a very good mixing of the liquid into the gas stream is obtained. It is further preferred that opening(s) are provided distributed over essentially the whole of this length. Further, the openings are preferably so many and so large that the tubular part has an open/closed ratio in the range 25-75%, and preferably in the range 40-60%, and most preferably about 50%. By open/closed ratio is in this context to be understood the area of the tubular walls without openings divided by the total area of the openings.

According to another aspect of the invention there is provided an exhaust gas treatment system comprising:
an optional first section comprising an emission control;
a second section comprising a mixing apparatus for mixing a liquid in the exhaust gas;
a third section comprising a catalytic emission control device;
wherein said section are sequentially arranged in a flow path for said exhaust gas, and
wherein the mixing apparatus comprises:
   a mixing chamber;
   a tubular part having an inlet, an outlet and a tubular wall extending between said inlet and outlet, wherein said tubular wall is provided with at least one opening enabling a gas passage through said wall, the tubular part providing an unobstructed tubular path extending between said inlet and said outlet;
   a liquid injector for injecting a liquid into said tubular part in the vicinity of said inlet;
   wherein the tubular part is arranged to receive a first part of said exhaust gas in said tubular part through said inlet, and to receive a second part of said exhaust gas through said at least one opening through the tubular wall.

The term "section" or "treatment section" are used herein as denomination for any units comprising filters, catalysts, acoustic units and the like that can be used to treat an exhaust gas stream. The first section may e.g. be a diesel particle filter (DPF) or a diesel oxidation catalyst (DOC).

By means of this aspect of the invention, similar advantages are obtained as discussed above in relation to the first aspect of the invention.

The present invention is of especial application in the treatment of the exhaust gases from internal combustion engines, notably diesel or spark ignition engines. With such exhaust gas streams, a series of treatments can be carried out using the nature of the contaminants in the exhaust gases to form reagents in the gas stream which can be used to eliminate or reduce other contaminants in a subsequent treatment. The engine may be a stationary engine, for example driving an electricity generator or a hydraulic fluid compression unit, or a marine engine. However, the invention is of especial application in the treatment of the exhaust gases from a diesel engine in a gas treatment assembly on a motor vehicle to attenuate the engine noise and to reduce the noxious emissions from the engine as described above. For convenience, the invention will primarily be described in terms of such a preferred use.

As discussed above, the exhaust gas treatment system may further comprise a by-pass channel arranged to lead a third part of said exhaust gas separated from the mixing apparatus, and to rejoin the first and second part of the exhaust gas after the outlet of the tubular part but before entry into the third section.

According to still another aspect of the invention there is provided a vehicle having a diesel engine, the vehicle being equipped with an exhaust gas treatment apparatus of the type discussed above for treating the exhaust gas from the diesel engine.

By means of this aspect of the invention, similar advantages are obtained as discussed above in relation to the previously discussed aspects of the invention.

According to still another aspect of the invention there is provided a method for mixing a gas of an exhaust gas stream with a liquid, said method comprising:
leading a first part of the gas stream into the inlet of a tubular part, said tubular part providing an unobstructed tubular path defined by a tubular wall extending from said inlet to an outlet;
introducing a liquid into the gas stream in the vicinity of said inlet of the tubular part; and
leading a second part of the gas stream into the tubular parts through openings in the wall of said tubular part.

By means of this aspect of the invention, similar advantages are obtained as discussed above in relation to the previously discussed aspects of the invention.

These and other aspects of the invention will be apparent from and elucidated with reference to the embodiments described hereinafter.

### Brief description of the drawings

For exemplifying purposes, the invention will be described in closer detail in the following with reference to embodiments thereof illustrated in the attached drawings, wherein:
Fig 1 shows a cross section through a mixing apparatus according to a first embodiment of the invention;
Fig 2 shows a cross section through a mixing apparatus according to a second embodiment of the invention;
Fig 3 shows a cross section through a mixing apparatus according to a third embodiment of the invention;
Fig 4 shows a cross section through a mixing apparatus according to a third embodiment of the invention;

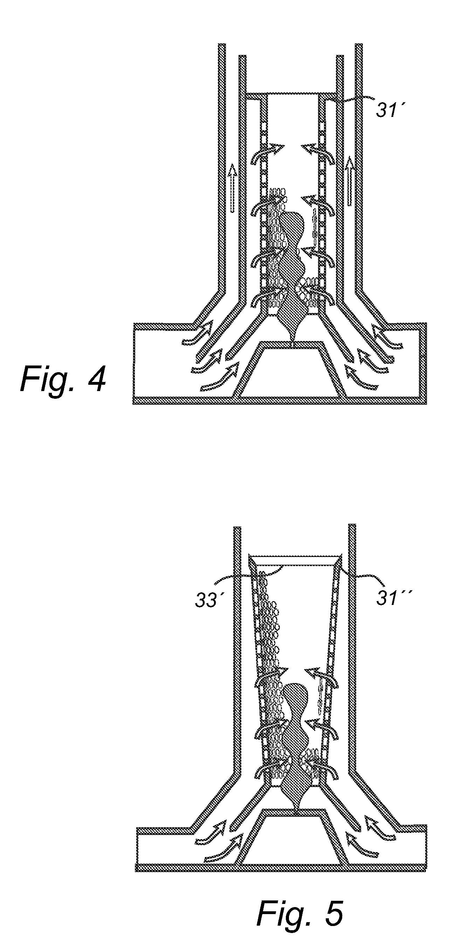

Fig 4 shows a cross section through a mixing apparatus according to a fourth embodiment of the invention;

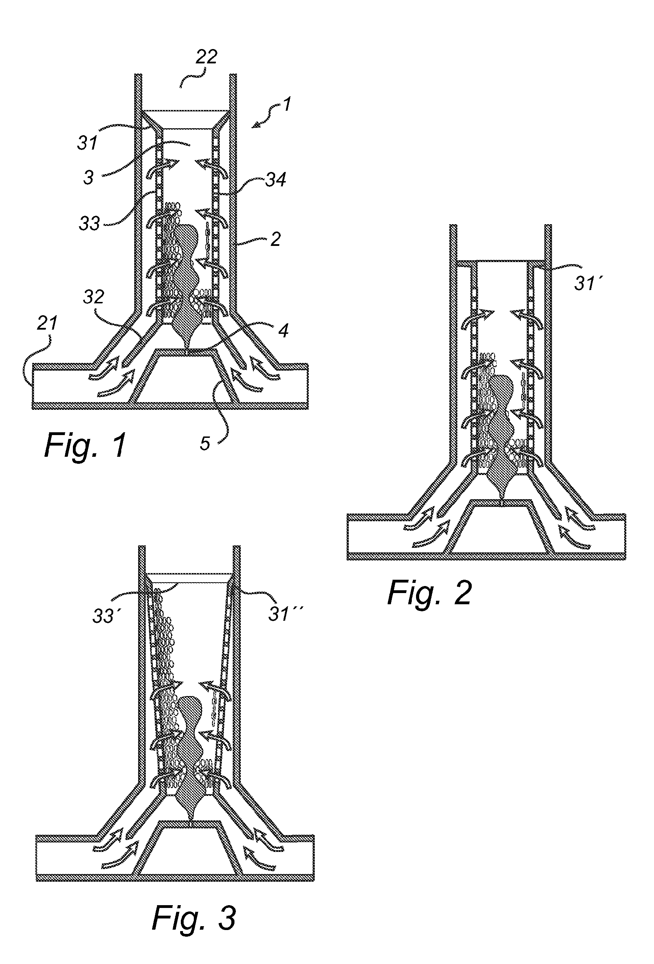

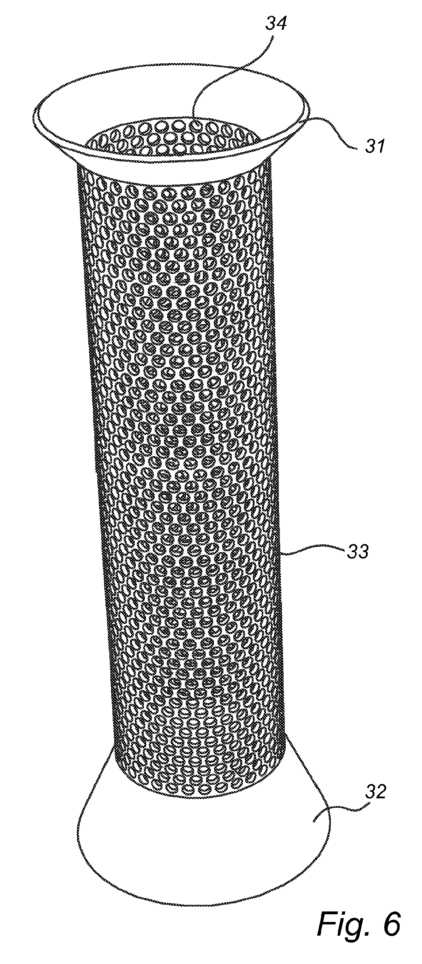

Fig 6 is a perspective view of a tubular part of the mixing apparatus in Fig 1;

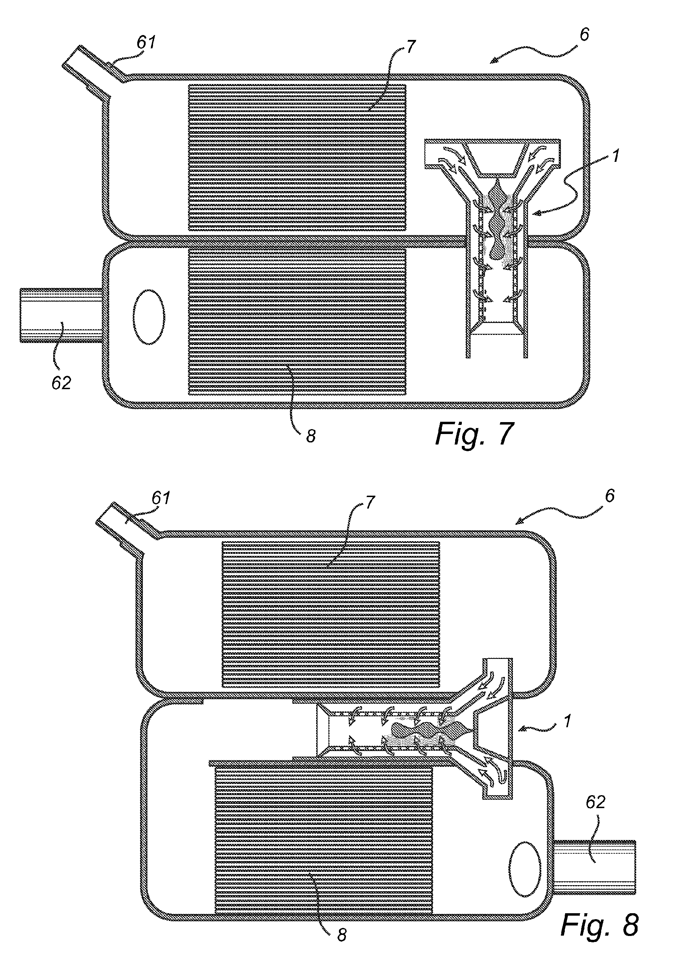

Fig 7 is a schematic overview of a gas treatment apparatus according to a one embodiment of the invention; and
Fig 8 is a schematic overview of a gas treatment apparatus according to another embodiment of the invention.

### Description of preferred embodiments

In the following detailed description, preferred embodiments of the present invention will be described. However, it is to be understood that features of the different embodiments are exchangeable between the embodiments and may be combined in different ways, unless anything else is specifically indicated. It may also be noted that, for the sake of clarity, the dimensions of certain components illustrated in the drawings may differ from the corresponding dimensions in real-life implementations of the invention. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

Further, the mixing device is in the following disclosed as being a part of a specific gas treatment apparatus for exhaust gases. However, even though this is a preferred field of use for the mixing apparatus, it is to be noted that the mixing device may also be used in many other types of exhaust gas treatment systems. Accordingly, the present invention is not limited to the specific gas treatment apparatuses set forth below.

Fig 1 illustrates a mixing apparatus 1 according to a first embodiment. The mixing apparatus comprises a mixing chamber 2, here in the form of a tubular compartment. The mixing chamber defines a mixing apparatus input 21, into which an exhaust gas stream is conveyed into the mixing apparatus, and a mixing apparatus output 22, through which the exhaust gas mixed with the liquid is conveyed out from the mixing apparatus.

The mixing apparatus further comprises a tubular part 3 having an inlet 32 and an outlet 31, and a tubular wall 33 extending between said inlet and outlet. The tubular part 3 is preferably arranged concentrically within the mixing chamber. The tubular wall is provided with at least one opening 34 enabling a gas passage through said wall, and preferably a plurality of perforations are provided, symmetrically distributed over almost the entire tubular wall. The tubular part 3 is illustrated in greater detail in Fig 6. The interior of the tubular part is essentially free from gas flow obstacles, thereby providing an unobstructed tubular path extending between the inlet 32 and the outlet 31. The inlet is preferably not provided with any openings or perforations.

In the illustrated embodiments, the inlet 21 into the mixing apparatus may be arranged on one side of the mixing apparatus, as illustrated in Fig 4 and 8. However, alternatively several inlets may be provided, or a large continuous opening extending around the whole or most of the circumference. For example, two openings may be provided, e.g. facing opposite directions. It is also feasible to provide a plurality of openings around the inlet 32 to the tubular part 3, or to provide a large inlet with an opening extending around the inlet 32 of the tubular part 3. Such opening arrangements are illustrated in Figs 1-3, 5 and 7.

The tubular wall preferably has, over the entire length, a diameter being at least 50% of the corresponding diameter of the mixing chamber, and more preferably at least 70%, and most preferably in the range 70-90%. Further, the tubular part preferably has an axial length in the range 10-100 cm, and more preferably in the range 15-60 cm, and most preferably in the range 25-50 cm. The openings/perforations preferably has a hole diameter of about 3-10 mm, and preferably in the range 4-8 mm, and most preferably in the range 5-6 mm, and the open/closed ratio is preferably in the range 25-75%, and more preferably in the range 40-60%, and most preferably about 50%.

The tubular part is preferably made of stainless steel or other suitable metal material, and preferably has a thickness in the range 0.8-2 mm, and preferably about 1 mm.

The inlet of the tubular part preferably forms a gradually downstream decreasing cross-sectional area. Preferably, the inlet has a frusto-conical funnel shape. The length of the inlet may typically be in the range 10-40 mm.

The mixing apparatus further comprises a liquid injector 4 for injecting a liquid into the tubular part. The outlet of the liquid injector is arranged in the vicinity of the inlet of the tubular part, and preferably protrudes into the inlet. For example, the outlet of the liquid injector may be arranged about halfway into the inlet of the tubular part.

It is further preferred that the liquid injector is arranged on a protruding bulge 5, arranged concentrically in relation to said funnel shaped inlet 32, and extending into the funnel shaped inlet. Hereby, exhaust gas entering into the mixing chamber can enter into the tubular parts from all sides, providing an evenly distributed gas flow around the liquid injector.

The funnel shaped inlet 32 is arranged to split the gas stream entering into the mixing chamber into two parts, a first part which is conveyed into the inlet 32 of the tubular part, and a second part which is conveyed on the outside of the tubular part 3, between the walls of the mixing chamber and the tubular wall of the tubular part, so that said second part of the gas stream can subsequently enter the tubular part through the openings of the tubular wall.

The outlet 31 of the tubular part 3 is preferably connected to the wall of the mixing chamber around the periphery of the outlet. The outlet may have various forms. For example, the outlet may have a frusto-conical, funnel shaped form with a cross-sectional area expanding towards the outlet end. Such an embodiment is illustrated in Fig 1. Alternatively, the outlet may be formed as a flange extending essentially in a transverse direction from the tubular part. Such an embodiment of the outlet 31' is illustrated in Fig 2. Further, another alternative, with a relatively long, slowly tapering funnel shaped tubular wall 33', and a small outlet 31" is illustrated in Fig 3. Optionally, the tapering outlet end may also be provided with openings or perforations. Other outlet designs are also feasible.

Optionally, a third part of the gas stream may be led so that it by-passes the tubular part. This may be accomplished by providing an opening between the outlet of the tubular part and the wall of the mixing chamber. However, preferably such a by-pass stream is lead through a separate path by providing a separate channel bypassing the mixing chamber or the entire mixing apparatus. An example of such an embodiment is schematically illustrated in Fig 4, indicating a by-pass channel 9. Such an arrangement would lead to even lower overall flow resistance and pressure loss. A by-pass channel may also be located entirely separate from the mixing apparatus.

Alternatively, as is illustrated in Fig 5, an opening may be provided between the tubular part and the wall of the mixing chamber, allowing a part of the gas stream flowing on the outside of the tubular part to escape through said opening, without entering the perforations/openings of the tubular part wall.

It is also possible to provide the perforated tubular wall between the inlet and outlet with a frusto-conical form, so that the cross-sectional area gradually increases towards the outlet end. Alternatively or additionally, the distance between the sidewall of the mixing chamber and the tubular wall may also be gradually decreasing towards the outlet of said tubular part.

The mixing apparatus may be arranged as a part of an exhaust gas treatment system. Such systems will now be discussed with reference to Figs 7 and 8.

The exhaust gas treatment system 6 comprises a first section 7 comprising an emission control, a second section comprising the mixing apparatus 1 for mixing a liquid in the exhaust gas and a third section 8 comprising a catalytic emission control device. The section are sequentially arranged in a flow path for said exhaust gas, leading from an inlet 61, through the first section 7, the second section 1 and the third section 8, and out through an outlet 62. In the embodiment illustrated in Fig 7, the inlet 61 and outlet 62 are arranged on the same side of the exhaust gas treatment system, and in the embodiment illustrated in Fig 8 the inlet and outlet are arranged on different sides.

The exhaust gas treatment system may e.g. be installed on a vehicle having a diesel engine for treating the exhaust gas from the diesel engine.

The exhaust gas treatment system may alternatively comprise fewer or more sections for performance of various forms of gas treatment, as is per se known in the art. The sections may e.g. be one or several of a catalyst, a filter, a conveying conduit (tubular paths), etc. The mixing apparatus forms a mixing region in which an additive fluid, such as a reducing agent, is added through an additional inlet to the gas stream and in which the gas and reducing agent are mixed. Upon leaving the mixing region, the gas may e.g. enter a catalytic treatment chamber, comprising a catalytic treatment element. The catalytic treatment element includes a catalyst that catalyses a reaction between at least one chemical within the gas stream and the reducing agent.

The catalytic treatment chamber 8 preferably contains a catalytic treatment element that preferably catalyses a reaction between a gas stream passing through the apparatus and the reducing agent added such that NOₓ in the gas stream is converted to N₂. The preferred reducing agent is a urea in water solution and this is added through the additional inlet into the gas stream. It should be noted that the catalytic treatment element may be any other catalytic treatment element, for example it may act as a hydrolysis catalyst. A potential application is for example diesel exhaust after-treatment systems using selective catalytic reduction (SCR), where an additive is injected under low pressure into an exhaust stream.

Although it is preferred that the mixing device discharges directly into the catalytic treatment chamber it should be understood that the apparatus may include other chambers between the mixing device and the catalytic treatment chamber. Gas still preferably flows through the mixing apparatus to pass from the guide chamber to the catalytic treatment chamber, but may additionally have to pass through other chambers.

The mixing apparatus may also be used to mix the gas stream with a fluid containing hydrocarbons, such as diesel, before filtration, e.g. in case of an active regenerating particle filter.

The mixing apparatus may be optimized for various uses and use context in a number of ways. For example, the length, shape and diameter of the tubular wall may be altered. The size, shape and configuration of the openings through the tubular wall may also be varied. Still further, the shape, position and size of the inlet of the tubular part may also be varied, in order to e.g. achieve different relations between the first and second part of the split gas stream.

### Experimental results

Experimental computer simulations have confirmed that the mixing apparatus as discussed above is very efficient. The new mixing apparatus provides improved mixing of the liquid in the gas, and greatly reduces the problem of liquid deposition on the walls of the exhaust gas treatment system. In the new mixing apparatus, the flow becomes more axial, especially in the vicinity of the liquid injector, and there is much reduced recirculation occurring in the vicinity of the liquid injector. The liquid spray is less stratified after introduction into the gas stream, and becomes better mixed. With the new mixing apparatus, there is much less wall interaction between the liquid and the walls of the system, inter alia due to the inflow of gas through the openings/perforations of the tubular part, which enhances mixing and reduces wall interaction.

### Concluding remarks

Specific embodiments of the invention have now been described. However, several alternatives are possible, as would be apparent for someone skilled in the art. For example, the proposed solution appears to be applicable for essentially any type of exhaust gas treatment system. Further, the tubular part may be of essentially any shape and dimension. Still further, the openings may be provided in various sizes and forms, and with various distribution over the tubular wall.

Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. Further, a single unit may perform the functions of several means recited in the claims.

## Claims

1. A mixing apparatus for use in an exhaust gas treatment system for mixing a liquid in the exhaust gas, comprising:
a mixing chamber;
a tubular part having an inlet, an outlet and a tubular wall extending between said inlet and outlet, wherein said tubular wall is provided with at least one opening enabling a gas passage through said wall, the tubular part providing an unobstructed tubular path extending between said inlet and said outlet;
a liquid injector for injecting a liquid into said tubular part in the vicinity of said inlet;
wherein the tubular part is arranged to receive a first part of said exhaust gas in said tubular part through said inlet, and to receive a second part of said exhaust gas through said at least one opening through the tubular wall.

2. The mixing apparatus of claim 1, wherein the exit of the liquid injector is arranged inside the tubular part.

3. The mixing apparatus of claim 1 or 2, wherein the inlet of the tubular part is funnel shaped, and wherein the liquid injector is arranged on a protruding bulge, preferably arranged concentrically in relation to said funnel shaped opening.

4. The mixing apparatus of any one of the preceding claims, wherein the tubular wall is provided with a plurality of openings, and preferably perforations, said openings preferably being arranged symmetrically in the circumferential direction of said tubular wall.

5. The mixing apparatus of any one of the preceding claims, wherein the mixing chamber is tubular, and the tubular part is arranged essentially concentrically within said mixing chamber.

6. The mixing apparatus of any one of the preceding claims, wherein the outlet of the tubular part is connected to a wall of the mixing chamber around the periphery of the outlet.

7. The mixing apparatus of any one of the preceding claims, wherein at least a part of the tubular wall forms a funnel shaped section with an increasing cross-sectional area towards the outlet.

8. The mixing apparatus of any one of the preceding claims, wherein the distance between a sidewall of the mixing chamber and the tubular wall is gradually decreasing towards the outlet of said tubular part.

9. The mixing apparatus of any one of the preceding claims, wherein the tubular wall has a diameter being at least 50% of the corresponding diameter of the mixing chamber, and preferably at least 70%, and most preferably in the range 70-90%.

10. The mixing apparatus of any one of the preceding claims, wherein the tubular part has an axial length in the range 10-100 cm, and preferably in the range 15-60 cm, and most preferably in the range 25-50 cm.

11. The mixing device of any one of the preceding claims, wherein the tubular part has an open/closed ratio in the range 25-75%, and preferably in the range 40-60%, and most preferably about 50%.

12. An exhaust gas treatment system comprising:
an optional first section comprising an emission control;
a second section comprising a mixing apparatus for mixing a liquid in the exhaust gas;
a third section comprising a catalytic emission control device;
wherein said section are sequentially arranged in a flow path for said exhaust gas, and
wherein the mixing apparatus comprises:
a mixing chamber;
a tubular part having an inlet, an outlet and a tubular wall extending between said inlet and outlet, wherein said tubular wall is provided with at least one opening enabling a gas passage through said wall, the tubular part providing an unobstructed tubular path extending between said inlet and said outlet;
a liquid injector for injecting a liquid into said tubular part in the vicinity of said inlet;
wherein the tubular part is arranged to receive a first part of said exhaust gas in said tubular part through said inlet, and to receive a second part of said exhaust gas through said at least one opening through the tubular wall.

13. The exhaust gas treatment system of claim 12, further comprising a by-pass channel arranged to lead a third part of said exhaust gas separated from the mixing apparatus, and to rejoin the first and second part of the exhaust gas after the outlet of the tubular part but before entry into the third section.

14. A vehicle having a diesel engine, the vehicle being equipped with an exhaust gas treatment apparatus as claimed in any one of the claims 12-13 for treating the exhaust gas from the diesel engine.

15. A method for mixing a gas of an exhaust gas stream with a liquid, said method comprising:
leading a first part of the gas stream into the inlet of a tubular part, said tubular part providing an unobstructed tubular path defined by a tubular wall extending from said inlet to an outlet;
introducing a liquid into the gas stream in the vicinity of said inlet of the tubular part; and
leading a second part of the gas stream into the tubular parts through openings in the wall of said tubular part.
